# FASCICULE DE BREVET EUROPEEN

(11) **EP 0 652 260 B1**
(45) Date de publication et mention de la délivrance du brevet: **29.12.1999**
(21) Numéro de dépôt: 94402550.1
(22) Date de dépôt: 10.11.1994
(51) Int. Cl.: C08L 95/00

(54) **Matériau granulaire dense enrobé à froid à l'émulsion de bitume gélifiée, son procédé de fabrication et son utilisation**
Von gelierter Kaltbitumen-Emulsion beschichtetes Granulatmaterial, dessen Herstellungsverfahren und Verwendung
Dense aggregate material coated with a cold bitumen gel-emulsion, its preparation method and use

(30) Priorité: 10.11.1993 FR 9313457
(43) Date de publication de la demande: 10.05.1995
(73) Titulaire: COLAS S.A., F-92653 Boulogne-Billancourt Cédex (FR)
(72) Inventeur: Durand, Graziella, F-92270 Bois-Colombes (FR); Poirier, Jean-Eric, F-78114 Cressely (FR); Godard, Eric, F-78180 Montigny le Bretonneux (FR); Heurat, Jean-Pierre, F-78340 Maurepas (FR)
(74) Mandataire: Phélip, Bruno

(56) Documents cités:
- EP-A- 0 534 039
- US-A- 4 822 427

## Description

La présente invention concerne les matériaux enrobés à l'émulsion de bitume et leurs procédés de fabrication. Elle concerne également l'utilisation d'un agent gélifiant dans un enrobé dense.

Les émulsions de bitume sont des dispersions de bitume dans une phase aqueuse continue. La formation de l'émulsion est permise par un agent tensioactif ou émulsifiant, et réalisée par l'emploi d'une énergie mécanique de cisaillement du liant.

De nombreuses compositions de la phase aqueuse, comme du bitume, ou de la phase hydrocarbonée dispersée, ont été proposées et sont utilisées en fonction des propriétés recherchées pour les émulsions.

On utilisera le mot bitume pour désigner l'un des produits suivants :
- les bitumes naturels, les bitumes de distillation directe, les bitumes de désasphaltage, les bitumes soufflés ou semi-soufflés, les bitumes soufflés ou semi-soufflés,
- l'un quelconque de ces bitumes modifiés par des polymères (comme, par exemple, le styrène-butadiène-styrène, le styrène-isoprène-styrène, les EVA, les SBR, les résines époxy ou polyuréthane),
- l'un quelconque de ces bitumes dans lequel on aurait incorporé un filler,
- les bitumes de synthèse (dits pigmentables).

On définit ainsi les conditions dans lesquelles sont contrôlées la viscosité, la stabilité au stockage, la rupture de l'émulsion, le mûrissement du liant, et ses propriétés finales (adhésivité, cohésivité).

Lorsque cette émulsion est utilisée pour enrober des matériaux, elle doit posséder les propriétés nécessaires à la solution de différentes contraintes bien connues de l'homme de l'art.

En particulier, le producteur de matériaux enrobés à l'émulsion est confronté à l'influence de la teneur en eau initiale des agrégats, c'est-à-dire au moment de leur utilisation, vis-à-vis des propriétés du mélange matériaux-émulsion, propriétés qui conditionnent, par exemple, le transport, la mise en oeuvre et la durabilité.

En effet, les émulsions actuellement connues ont un comportement optimal pour un domaine de teneur en eau réduit. Si les granulats sont trop secs sur stock, on ajoute communément de l'eau au moment du malaxage avant l'introduction de l'émulsion de bitume. En revanche, si la teneur en eau naturelle des granulats est trop élevée, l'enrobage est soit de mauvaise qualité, soit tel que le mélange présente une consistance trop molle (dite de "soupe") qui le rend impropre à une bonne utilisation. Les défauts constatés sont alors :
- écoulement de l'émulsion de bitume + eau pendant le chargement et le transport,
- impossibilité de mettre en oeuvre avec les moyens usuels (finisseur, répandeur),
- impossibilité de compacter,
- impossibilité de rendre à la circulation.

Dans ce cas, la seule possibilité est d'attendre que la teneur en eau naturelle des granulats revienne à des valeurs convenables par essorage naturel du stock.

Cette opération est, d'une part, très dépendante des conditions météorologiques, donc difficilement maîtrisable, et d'autre part, coûteuse en temps ; elle retarde alors le déroulement du chantier.

On peut parfois envisager de sécher artificiellement les granulats dans un tambour sécheur, par exemple, dans une centrale d'enrobage à chaud. Ceci permet de réaliser le chantier, mais annule l'intérêt de l'enrobage à froid.

On peut aussi éviter le mouillage excessif des granulats par la pluie en les abritant sous des auvents, ce qui est très contraignant et coûteux, en particulier dans le cas de centrales mobiles, et donc contraire à l'intérêt présenté par les enrobés à froid.

Cette dépendance de la faisabilité des matériaux enrobés à l'émulsion de bitume vis-à-vis de la teneur en eau naturelle des granulats est donc un obstacle à la diffusion et à la systématisation de l'emploi de la technique de l'enrobage à froid.

Un autre obstacle limitant la diffusion de l'enrobage à froid provient de l'aptitude au stockage de l'émulsion qui est limitée dans le temps. En effet, les émulsions bitumineuses utilisées jusqu'à maintenant ne peuvent être stockées au-delà d'une quinzaine de jours sans perdre leurs propriétés nécessaires à l'obtention d'un bon enrobage des granulats. On constate des phénomènes de décantation de l'émulsion lui faisant perdre son homogénéité.

Il est souhaitable de pouvoir disposer d'émulsions que l'on peut stocker pendant une longue durée, pendant plus d'un mois par exemple.

Résoudre ces problèmes permet de rendre possible une large diffusion de cette technique souple et économique.

Il est bien connu de l'homme de l'art que la qualité de l'enrobage d'un mélange granulaire avec de l'émulsion de bitume à une teneur en eau convenable dépend de deux paramètres importants : la viscosité de l'émulsion et sa vitesse de rupture.

En particulier, la viscosité a fait l'objet de nombreuses études. La viscosité de l'émulsion résulte essentiellement de la concentration de la phase dispersée (le bitume dans la phase aqueuse), mais elle est également influencée par la nature même de la phase dispersée, de la phase aqueuse, en particulier du type et de la concentration de l'agent émulsifiant utilisé. Par ailleurs, il est connu que la présence de sels, tels que NaCl, dans le bitume agit sur sa viscosité.

Une faible viscosité au malaxage permet une bonne répartition du liant, alors qu'une émulsion trop visqueuse est mal dispersée et ne permet pas un bon enrobage, en particulier de fines. Une vitesse de rupture trop rapide de l'émulsion de bitume, même fluide, aboutit au seul enrobage des fines et de la fraction sableuse des granulats. Le matériau ainsi obtenu est soit inutilisable, soit si l'émulsion est judicieusement ajustée au sens de la vitesse de rupture (émulsion semi-rompue dans la fraction sableuse du mélange granulaire) conduit à un mélange de type grave-émulsion avec un mortier bien enrobé et des gravillons non enrobés (dits "blancs"). Ces graves-émulsions sont bien connues, largement répandues et présentent certains intérêts. Elles ne peuvent cependant pas prétendre présenter de très bonnes caractéristiques mécaniques, comparables à celles des enrobés à chaud.

Une émulsion fluide et stable permet un très bon enrobage, mais celui-ci n'est pas durable, car le mélange évolue dans le temps par écoulement de l'émulsion hors du mélange.

Différentes tentatives ont déjà été mises en oeuvre pour permettre l'obtention d'un enrobage régulier à froid.

Selon le brevet FR-2.679.274 de la déposante, on a proposé un procédé de double enrobage selon lequel on ajoute successivement dans un malaxeur les gros éléments, une première émulsion, puis les éléments fins, et une deuxième émulsion. L'ensemble est malaxé pendant une durée suffisante pour obtenir un mélange homogène et susceptible d'être stocké dans le temps nécessaire.

Cette fabrication en plusieurs étapes donne de bons résultats, mais est nécessairement plus difficile à mettre en oeuvre qu'une fabrication en une seule étape.

D'autres tentatives ont été orientées vers le contrôle de la viscosité de l'émulsion lorsqu'elle est préparée ou lorsqu'elle est mélangée aux granulats. Ce contrôle est obtenu par ajout d'agents épaississants, comme cela est décrit par exemple dans les documents US-A-4.822.427 et EP-A-0.534.039.

US-A-4.822.427 propose l'adjonction d'un agent épaississant de façon à augmenter le temps d'ouvrabilité, c'est-à-dire la durée pendant laquelle l'émulsion peut être manipulée et travaillée avant sa rupture. Il est insisté sur le fait que les agents épaississants permettent d'éviter l'écoulement de l'émulsion à travers des matériaux très poreux.

EP-A-0.534.039 décrit, pour une émulsion de bitume cationique, l'utilisation d'un épaississant qui n'absorbe pas l'eau.

Par ailleurs, on connaît également des travaux selon lesquels on cherche à mettre au point une émulsion à granulométrie fine de manière à favoriser l'enrobage. Toutefois, ce dernier procédé paraît particulièrement sensible à la teneur en eau des granulats.

Le but de l'invention est donc de proposer une formulation de matériaux enrobés à l'émulsion de bitume, qui permette l'utilisation de granulats de dimensions variées avec une bonne homogénéité.

C'est également un but de l'invention que de proposer une formulation de matériaux enrobés à l'émulsion, dont les propriétés sont peu dépendantes de la teneur en eau initiale des granulats utilisés.

L'invention concerne un matériau granulaire dense enrobé à l'émulsion de bitume obtenu par enrobage à froid de granulats par une emulsion aqueuse de bitume, caractérisé en ce que la fraction granulaire comporte un passant au tamis de 2 mm d'au moins 25 % et un passant au tamis de 0,08 mm d'au moins 5 % de sa masse totale, et en ce que la phase aqueuse contient entre 0,25 à 5g/l d'émulsion d'un agent gélifiant lui donnant un comportement gélifié manifesté par l'existence d'un seuil d'écoulement supérieur à 0,1 N/m².

L'utilisation d'un agent gélifiant confère, à la phase aqueuse des matériaux enrobés à l'émulsion de bitume d'enrobage, un comportement de gel. Ce comportement est caractérisé en ce que cette phase, habituellement qualifiée de liquide, se comporte comme un solide, lorsque les contraintes de cisaillement qui lui sont appliquées, sont inférieures à une valeur limite.

Lorsque les contraintes appliquées sont supérieures à cette valeur seuil, la phase aqueuse du matériau enrobé à l'émulsion retrouve toutes ses propriétés de liquide.

L'agent gélifiant peut être incorporé à différents stades du procédé de fabrication du matériau enrobé à l'émulsion.

L'invention concerne également l'utilisation d'un agent gélifiant dans un matériau granulaire dense.

Plus précisément, il s'agit de l'utilisation de 0,25 à 5 grammes par litre d'émulsion d'un agent gélifiant dans un matériau granulaire dense, obtenu par enrobage à froid des granulats par une émulsion aqueuse de bitume, dont la fraction granulaire comporte un passant au tamis de 2 mm d'au moins 25 % et un passant au tamis de 0,08 mm d'au moins 5 % de sa masse totale, l'agent gélifiant donnant à la phase aqueuse un comportement gélifié manifesté par l'existence d'un seuil d'écoulement supérieur à 0,1 N/m².

Dans différents modes de réalisation, l'invention présente les caractéristiques suivantes, éventuellement combinées :
- la concentration de l'agent gélifiant est déterminée, de telle sorte que l'émulsion ait un seuil d'écoulement supérieur à 1 N/m² ;
- l'agent gélifiant est composé de polymères naturels de la famille des polysaccharides ;
- l'agent gélifiant est composé de polymères de synthèse hydrosolubles ;
- l'agent gélifiant est composé de tensioactifs amphotères ;
- l'agent gélifiant est composé de tensioactifs polymériques.

Dans un premier mode d'utilisation, il peut être présent dans l'émulsion avant le mélange avec les matériaux.

Dans un second mode d'utilisation, il peut être introduit dans les granulats avant le mélange avec l'émulsion.

Le résultat, en termes de consistance et de propriétés mécaniques des matériaux enrobés à l'émulsion, est indépendant du mode de préparation de l'enrobé.

L'invention s'applique aux matériaux enrobés denses à l'émulsion, qui sont particulièrement sensibles au taux d'humidité des granulats.

Les matériaux enrobés sont qualifiés de denses, lorsque la fraction granulaire comporte un passant au tamis de 2 mm d'au moins 25 % et un passant au tamis de 0,08 mm d'au moins 5 % de sa masse totale.

Le choix de ce comportement gélifié pour la phase aqueuse de ces matériaux traités à l'émulsion, comme pour l'émulsion elle-même, présente la propriété technologique suivante.

Ce comportement de gel (comportement rhéologique analogue à un solide pour les contraintes de cisaillement inférieur à une valeur seuil, comportement rhéologique analogue à un liquide au-delà) permet l'utilisation de l'émulsion dans toutes les machines et les dispositifs utilisés pour l'enrobage. Elle peut, en particulier, être véhiculée par des pompes.

Cette émulsion permet d'obtenir un bon enrobage à froid. De plus, après enrobage, cette émulsion ne s'écoulera pas du mélange, tant que la contrainte appliquée, soit par manutention, soit par gravité, est faible par rapport à la valeur limite mentionnée plus haut. Le stockage des enrobés est ainsi facilité.

On considérait jusqu'à présent que compte tenu des conditions dans lesquelles les émulsions sont fabriquées, stockées et utilisées, seul un nombre limité d'additifs tels que ceux augmentant la viscosité de l'émulsion, pouvait être utilisé.

Au contraire, il est apparu que l'addition d'un agent gélifiant, loin de constituer une difficulté insurmontable, procure les effets avantageux mentionnés plus haut, sans gêner la mise en oeuvre des appareils et dispositifs couramment utilisés, et en en facilitant au contraire l'utilisation.

La concentration de l'agent gélifiant permet de contrôler le niveau du seuil d'écoulement et, de manière préférée, cette concentration est déterminée, de telle sorte que le seuil d'écoulement soit supérieur à 0,1 N/m², ou même à 1 N/m².

Les agents gélifiants ne soulèvent pas de problèmes de compatibilité particuliers et peuvent être mis en oeuvre avec la plupart des émulsions utilisées dans le domaine routier, en particulier avec des émulsifiants aussi bien cationiques qu'anioniques ou non ioniques. Toutefois, il est souhaitable d'éviter l'association de gélifiant et d'émulsifiant de charges opposées. Un agent gélifiant chargé est donc en principe associé à un émulsifiant neutre ou de même charge. Chacun de ces émulsifiants donnant à l'émulsion résultante les propriétés habituelles que l'on peut en attendre.

L'agent gélifiant peut être choisi, soit parmi les polymères naturels de la famille des polysaccharides (gomme xanthane, galactomanane, gomme scléroglucane...), soit parmi les polymères de synthèse hydrosolubles (dérivés du polyacrylamide, polymère à fonctionnalité polyuréthane...), parmi les tensioactifs amphotères (alkylbétaïne, alkylamidobétaïne...) ou parmi les tensioactifs polymériques.

La concentration de ces agents gélifiants variant selon leur nature sera généralement comprise entre 0,25 à 5 g/l d'émulsion, par exemple entre 0,5 à 2 g/l.

Le procédé de fabrication de ces émulsions comporte les étapes traditionnelles de préparation de la phase aqueuse et de mélange de cette phase avec le bitume dans un moulin colloïdal. Trois procédés de fabrication donnent de bons résultats.

Dans le premier de ces procédés de fabrication, l'agent gélifiant est ajouté aux autres composants lors de la préparation de la phase aqueuse.

Selon le deuxième mode de préparation, l'agent gélifiant est ajouté lors du mélange de la phase aqueuse et du bitume dans le moulin colloïdal.

Le troisième procédé de fabrication consiste à incorporer l'agent gélifiant à l'émulsion après la fabrication de celle-ci.

On peut alors ajouter l'agent gélifiant aux granulats avant le mélange avec l'émulsion.

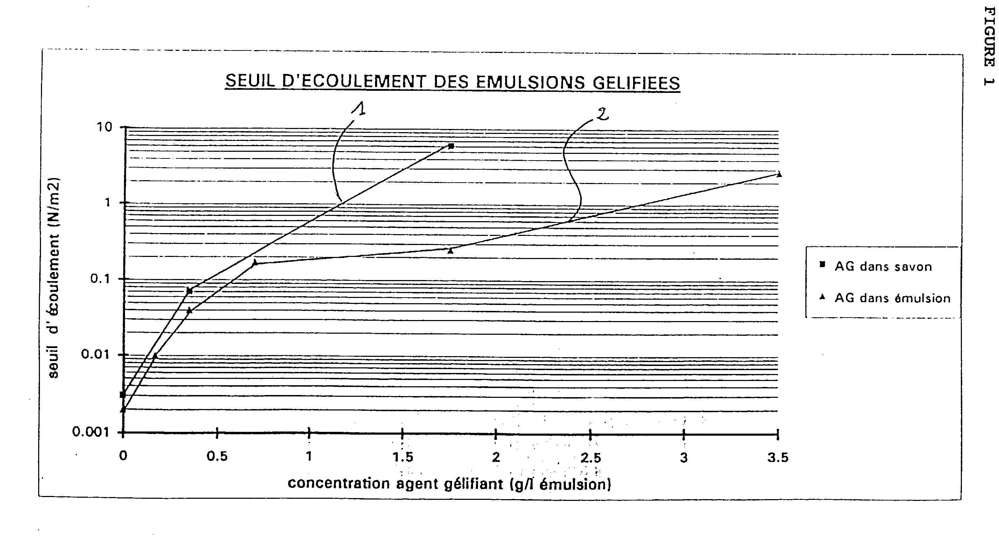

On a porté sur la Figure 1, l'évolution du seuil d'écoulement des émulsions de l'invention. La courbe 1 joignant des points matérialisés par des carrés concerne une émulsion obtenue par introduction de l'agent gélifiant dans le savon. La courbe 2 joignant des points matérialisés par des triangles concerne une émulsion obtenue par introduction de l'agent gélifiant après émulsification en fonction de la teneur en agent gélifiant incorporée à l'émulsion.

Les exemples suivants présentent différentes réalisations des émulsions de l'invention et de leur procédé de réalisation.

### EXEMPLE A

On réalise une émulsion d'enrobage contenant 65 % d'un bitume 80/100 d'origine SHELL BERRE et dont la phase aqueuse contient, à raison de 8 kg par tonne d'émulsion, une polyamine de suif (POLYRAM S de la Société CECA). Le pH de la phase aqueuse est ajusté à 1,00 avec de l'acide chlorhydrique.

A cette émulsion, on ajoute une gomme naturelle de type polysaccharide à raison de 0,35 % en tant qu'agent gélifiant.

Le mélange est agité pendant environ 30 mn.

L'émulsion présente un seuil d'écoulement de 3,5 N/m².

Cette émulsion A est utilisée pour l'enrobage d'un granulat répondant à la formule suivante :

| | |
|---|---|
| agrégats d'Arvieu 6/10 | 38 % |
| agrégats d'Arvieu 2/6 | 19 % |
| agrégats d'Arvieu 0/2 | 43 % |

A cet agrégat, est ajoutée une quantité d'émulsion de 9,2 % en masse, soit 6 % de liant par rapport aux agrégats.

Les résultats obtenus sont présentés dans le tableau suivant par référence aux mêmes agrégats enrobés par une émulsion témoin 1 constituée d'une émulsion d'enrobage à 65 % de bitume 80/100 d'origine SHELL BERRE, dont la phase aqueuse est identique à celle de l'émulsion A.

La teneur en eau de mouillage est celle qui donne un comportement optimum, tant du point de vue de la qualité de l'enrobage que de la consistance, gage d'une bonne maniabilité nécessaire à la bonne mise en oeuvre du matériau enrobé.

| | EMULSION TEMOIN 1 | EMULSION A |
|---|---|---|
| % agent gélifiant | 0 % | 0,35 % |
| EAU de mouillage | 1,5 % | 3 % |
| Résultats étude DURIEZ | | |
| 1 R 14j AIR 18°C (MPa) | 5,99 | 4,20 |
| 1 coefficient r/R | 0,88 | 0,65 |

L'étude DURIEZ est réalisée selon la norme NF P98-251-4.

R à 14 jours dans l'air à 18°C est défini comme la résistance mécanique (à la compression) d'éprouvettes ayant séjourné 14 jours dans une étuve régulée à 18°C.

r est la valeur de résistance mécanique (à la compression) d'éprouvettes ayant séjourné 7 jours dans une étuve régulée à 18°C et 7 jours dans un bain d'eau également à 18°C.

Le coefficient r/R représente le rapport de ces deux valeurs. Il est caractéristique de la sensibilité à l'eau de la résistance mécanique des enrobés.

Les valeurs rapportées dans le tableau indiquent que le matériau enrobé selon l'invention présente des caractéristiques mécaniques proches de celles de l'enrobé classique, tout en admettant une quantité d'eau double. Cette teneur en eau aurait conduit à une consistance beaucoup trop molle avec la formulation classique.

Cette formulation A permet d'accommoder des granulats dont la teneur en eau est de l'ordre de grandeur de celle qu'aurait eu ces granulats, s'ils avaient été soumis à la pluie. En effet, un sable retient 2 à 5 % d'eau et un gravillon 1 à 2 %.

### EXEMPLE B

On réalise une émulsion de bitume élastomère pour enrobé éventuellement coloré à raison de 65 parties d'un bitume de synthèse modifié par des polymères (polymère commercialisé sous la dénomination MEXPHALTE C P1 par la Société SHELL).

Ce bitume est fluidifié par l'ajout de 4,5 % du fluidifiant commercialisé par la Société SHELL sous la dénomination SHELLSOL H.

Ce bitume est émulsifié à la pression atmosphérique dans 35 parties d'une phase aqueuse composée d'eau, de l'émulsifiant commercialisé sous la dénomination POLYRAM S par la Société CECA, dans laquelle est ajouté de l'acide chlorhydrique à 20°B.

L'agent gélifiant est incorporé à la phase aqueuse, de telle sorte que sa concentration en masse par rapport à l'émulsion soit 0,35 %.

Cette émulsion a servi à enrober une formule granulométrique :

| | |
|---|---|
| 4/10 | 50 % |
| 0/4 | 50 % |

La teneur en émulsion est identique à celle de l'exemple A.

La teneur en eau de mouillage a fait l'objet d'une variation de 0 à 5 % ; il a été déterminé à quelle gamme d'eau de mouillage correspondait une "bonne consistance du mélange" (à un taux inférieur, aspect trop raide, à un taux supérieur, aspect "soupe") et à partir de quel pourcentage d'eau parvenait-on à avoir un enrobage complet des granulats.

Les résultats sont regroupés dans le tableau ci-dessous en comparaison avec l'émulsion témoin.

| | % EAU POUR ENROBAGE COMPLET | % EAU POUR BONNE CONSISTANCE |
|---|---|---|
| Emulsion B | > 2 % | 2 - 5 % |
| Emulsion témoin | > 0,75 % | 0,50 - 0,71 % |

On remarque que :
- l'enrobé accepte une teneur en eau plus élevée,
- la gamme de pourcentage d'eau pour lequel la consistance du mélange est bonne, est bien supérieure à celle de l'émulsion témoin.

### EXEMPLE C

L'émulsion d'enrobage est réalisée à raison de 65 % de bitume dans une phase aqueuse contenant un émulsifiant de type propylènepolyamine de suif commercialisé sous la dénomination commerciale POLYRAM S par la Société CECA à la concentration de 0,8 % en masse par rapport à l'émulsion.

Cette émulsion est modifiée par apport d'un polyuréthane hydrosoluble non ionique à hauteur de 0,4 % en masse.

L'émulsion ainsi obtenue a un seuil d'écoulement τ = 1 N/m².

Cette émulsion permet d'obtenir un coulis par addition avec un granulat de type VAUBADON de granulométrie O/6 dont les propriétés sont les suivantes :

| PARAMETRE | EMULSION C | SPECIFICATION |
|---|---|---|
| Temps maniabilité | 2 minutes | > 1 minute |
| Temps de prise | 30 minutes | < 60 minutes |
| Consistance au cône | 0 | < 2 cm |

Essais dérivés des normes américaines AST M D 3910 - 1984

Maniabilité : Malaxage normal de 500 g de granulats avec le liant (eau et les additifs jusqu'à rupture visuelle de l'émulsion (prise en masse ou formation de mousse). Le temps est noté.

Temps de prise : En préparant un mélange de 500 g ou 1 kg, en l'appliquant sur une surface non absorbante à l'épaisseur nominale, en déterminant avec un papier absorbant tamponné en surface si l'émulsion a fait rupture ou non : papier noir ou brun = émulsion non rompue / papier mouillé propre = émulsion rompue. On note le temps écoulé entre la mise en place et la rupture de l'émulsion.

Consistance au cône : Un pâté est fait en coulis avec un moule conique de géométrie appropriée, on note l'affaissement du cône de coulis à sa base (augmentation du diamètre de la base par affaissement).

Cette émulsion C est utilisée pour l'obtention d'un enrobé à partir du granulat suivant :

| | | |
|---|---|---|
| Granulats silico-calcaires du Rhin 6/20 | | 45 % |
| Granulats silico-calcaires du Rhin 0/6 | | 55 % |
| Eau ajoutée | | 4,6 % |
| Emulsion C | | 5,4 % |
| Mesure réalisée étude DURIEZ | R (MPa) | 3,87 |
| | r (MPa) | 2,59 |
| | r/R | 0,67 |

Pour réaliser un matériau enrobé à l'émulsion de bitume, on prend :
- une masse donnée d'émulsion de bitume composée de bitume m_{b} dispersé dans une phase aqueuse mₐ,
- une masse donnée de granulats minéraux m_{g} dont la fraction granulométrique est appropriée à l'usage envisagé pour le matériau enrobé final. Ce granulat est accompagné d'une certaine quantité d'eau mᵢ et cela pour diverses raisons naturelles ou artificielles.

Le mélange de ces deux constituants contiendra alors une masse de granulat m_{g}, une masse de bitume m_{b}, une masse de phase aqueuse mᵢ + mₐ. Dans les revendications, le mot phase aqueuse désigne, lorsqu'il s'agit du matériau enrobé, cette somme mₐ + mᵢ. Lorsqu'on ne parle que d'émulsion, il s'agit de mₐ uniquement.

Les granulats utilisables dans le cadre de l'invention sont l'ensemble des matériaux routiers : grave émulsion, grave émulsion à forte teneur en bitume résiduel, enrobés ouverts ou semi-ouverts, bétons bitumineux, enrobés drainants, enrobés à forte teneur en vide, enrobés coulés à froid (slurry seal), enduits, enrobés minces à froid.

Ces matériaux routiers peuvent également contenir de la poudrette de caoutchouc, des fibres de différentes natures (cellulosiques, fibres de verre, polyéthylène, polyester, acrylique).

## Revendications

1. Matériau granulaire dense enrobé à l'émulsion de bitume, obtenu par enrobage à froid de granulats par une émulsion aqueuse de bitume,
caractérisé en ce que la fraction granulaire comporte un passant au tamis de 2 mm d'au moins 25 % et un passant au tamis de 0,08 mm d'au moins 5 % de sa masse totale, et en ce que la phase aqueuse contient entre 0,25 à 5 grammes par litre d'émulsion d'un agent gélifiant lui donnant un comportement gélifié manifesté par l'existence d'un seuil d'écoulement supérieur à 0,1 N/m².

2. Matériau enrobé à l'émulsion de bitume selon la revendication 1, caractérisé en ce que la concentration de l'agent gélifiant est déterminée, de telle sorte que l'émulsion ait un seuil d'écoulement supérieur à 1 N/m².

3. Matériau enrobé à l'émulsion de bitume selon l'une quelconque des revendications 1 à 2, caractérisé en ce que l'agent gélifiant est composé de polymères naturels de la famille des polysaccharides.

4. Matériau enrobé à l'émulsion de bitume selon l'une quelconque des revendications 1 à 2, caractérisé en ce que l'agent gélifiant est composé de polymères de synthèse hydrosolubles.

5. Matériau enrobé à l'émulsion de bitume selon l'une quelconque des revendications 1 à 2, caractérisé en ce que l'agent gélifiant est composé de tensioactifs amphotères.

6. Matériau enrobé à l'émulsion de bitume selon l'une quelconque des revendications 1 à 2, caractérisé en ce que l'agent gélifiant est composé de tensioactifs polymériques.

7. Procédé de fabrication d'un matériau enrobé à l'émulsion de bitume conforme à l'une quelconque ces revendications 1 à 6, caractérisé en ce que l'agent gélifiant est incorporé dans les granulats avant le mélange de l'émulsion.

8. Procédé de fabrication d'un matériau enrobé à l'émulsion de bitume conforme à l'une quelconque des revendications 1 à 6, caractérisé en ce que:
- on prépare la phase aqueuse de l'émulsion par mélange d'eau et d'agent émulsifiant,
- on mélange la phase aqueuse ainsi préparée au bitume dans un moulin colloïdal,
- on mélange ensuite l'émulsion et les granulats,
- l'agent gélifiant est ajouté au cours de l'une quelconque des étapes de ce procédé.

9. Procédé de fabrication d'un matériau enrobé à l'émulsion de bitume conforme à l'une quelconque des revendications 1 à 6, caractérisé en ce que:
- on prépare la phase aqueuse de l'émulsion par mélange d'eau et d'agent émulsifiant,
- on mélange la phase aqueuse ainsi préparée au bitume dans un moulin colloïdal,
- et pendant ce mélange, on incorpore l'agent gélifiant, l'émulsion est ensuite mélangée avec les granulats.

10. Procédé de fabrication d'un matériau enrobé à l'émulsion de bitume conforme à l'une quelconque des revendications 1 à 6, caractérisé en ce que:
- on prépare la phase aqueuse de l'émulsion par mélange d'eau et d'agent émulsifiant,
- on mélange la phase aqueuse ainsi préparée au bitume dans un moulin colloïdal,
- on mélange l'agent gélifiant avec l'émulsion ainsi formée,
- on mélange enfin l'émulsion avec les granulats.

11. Utilisation d'entre 0,25 à 5 grammes par litre d'émulsion d'un agent gélifiant dans un matériau granulaire dense, obtenu par enrobage à froid des granulats par une émulsion aqueuse de bitume, dont la fraction granulaire comporte un passant au tamis de 2 mm d'au moins 25 % et un passant au tamis de 0,08 mm d'au moins 5 % de sa masse totale, l'agent gélifiant donnant à la phase aqueuse un comportement gélifié manifesté par l'existence d'un seuil d'écoulement supérieur à 0,1 N/m².

## Patentansprüche

1. Dichtes, mit Bitumenemulsion beschichtetes Granulatmaterial, das durch Kaltummantelung von Granulat mit einer wäßrigen Bitumenemulsion erhalten ist,
**dadurch gekennzeichnet**,
daß der Granulatanteil zu wenigstens 25 % eine Siebfeine von 2 mm und zu wenigstens 5 % seiner Gesamtmasse eine Siebfeine von 0,08 mm aufweist und daß die wäßrige Phase zwischen 0,25 - 5 g Geliermittel pro Liter Emulsion enthält, welches dieser ein Gelierverhalten verleiht, das in einem Fließpunkt von oberhalb 0,1 N/m² zum Ausdruck kommt.

2. Mit Bitumenemulsion beschichtetes Material nach Anspruch 1,
**dadurch gekennzeichnet**,
daß die Konzentration des Geliermittels so bestimmt ist, daß die Emulsion einen Fließpunkt von oberhalb 1 N/m² erreicht.

3. Mit Bitumenemulsion beschichtetes Material nach den Ansprüchen 1-2,
**dadurch gekennzeichnet,**
daß das Geliermittel aus natürlichen Polymeren aus der Familie der Polysaccharide besteht.

4. Mit Bitumenemulsion beschichtetes Material nach den Ansprüchen 1-2,
**dadurch gekennzeichnet**,
daß das Geliermittel aus wasserlöslichen synthetischen Polymeren besteht.

5. Mit Bitumenemulsion beschichtetes Material nach den Ansprüchen 1-2,
**dadurch gekennzeichnet**,
daß das Geliermittel aus amphoteren Tensiden besteht.

6. Mit Bitumenemulsion beschichtetes Material nach den Ansprüchen 1-2,
**dadurch gekennzeichnet**,
daß das Geliermittel aus polymerischen Tensiden besteht.

7. Verfahren zur Herstellung eines mit Bitumenemulsion beschichteten Materials nach den Ansprüchen 1-6,
**dadurch gekennzeichnet**,
daß das Geliermittel dem Granulat vor dem Mischen der Emulsion beigemengt wird.

8. Verfahren zur Herstellung eines mit Bitumenemulsion beschichteten Materials nach den Ansprüchen 1-6,
**dadurch gekennzeichnet**,
daß
- man die wäßrige Phase der Emulsion durch Mischen von Wasser und Emulgator herstellt,
- man die so hergestellte wäßrige Phase dem Bitumen in einer Kolloidmühle beimischt,
- man anschließend die Emulsion und die Granulate mischt,
- das Geliermittel während einer der Etappen des Herstellungsvorgangs hinzugefügt wird.

9. Verfahren zur Herstellung eines mit Bitumenemulsion beschichteten Materials nach den Ansprüchen 1-6,
**dadurch gekennzeichnet**,
daß man
- die wäßrige Phase der Emulsion durch Mischen von Wasser und Emulgator herstellt,
- die so hergestellte wäßrige Phase dem Bitumen in einer Kolloidmühle beimischt,
- und Geliermittel während des Mischvorgangs hinzufügt, wonach die Emulsion mit dem Granulat vermischt wird.

10. Verfahren zur Herstellung eines mit Bitumenemulsion beschichteten Materials nach den Ansprüchen 1-6.
**dadurch gekennzeichnet**,
daß man
- die wäßrige Phase der Emulsion durch Mischen von Wasser und Emulgator herstellt,
- die so hergestellte wäßrige Phase dem Bitumen in einer Kolloidmühle beimischt,
- das Geliermittel mit der so hergestellten Emulsion vermischt,
- schließlich die Emulsion mit dem Granulat mischt.

11. Verwendung von zwischen 0,25 - 5 g Geliermittel pro Liter Emulsion in dichtem Granulatmaterial, das durch Kaltummantelung von Granulat mit einer wäßrigen Bitumenemulsion erhalten ist, dessen Granulatanteil zu wenigstens 25 % eine Siebfeine von 2 mm und zu wenigstens 5 % seiner Gesamtmasse eine Siebfeine von 0,08 mm aufweist, wobei das Geliermittel der wäßrigen Phase ein Gelierverhalten verleiht, das in einem Fließpunkt von oberhalb 0,1 N/m² zum Ausdruck kommt.

## Claims

1. Dense granular material coated with bitumen emulsion, obtained by cold coating of granulates with an aqueous emulsion of bitumen,
characterized in that the granular fraction contains at least 25% of its total mass of a material which passes a 2 mm sieve and at least 5% of material which passes a 0.08 mm sieve, and in that the aqueous phase contains between 0.25 to 5 grams per liter of emulsion of a gelling agent providing a gel-like behavior shown by the existence of a flow threshold greater than 0.1 N/nm².

2. Material coated with bitumen emulsion according to claim 1, characterized in that the concentration of the gelling agent is determined so that the emulsion has a flow threshold greater than 1 N/m².

3. Material coated with bitumen emulsion according to any one of claims 1 and 2, characterized in that the gelling agent is composed of natural polymers of the polysaccharide family.

4. Material coated with bitumen emulsion according to any one of claims 1 and 2, characterized in that the gelling agent is composed of synthetic water-soluble polymers.

5. Material coated with bitumen emulsion according to any one of claims 1 and 2, characterized in that the gelling agent is composed of amphoteric surface-active agents.

6. Material coated with bitumen emulsion according to any one of claims 1 and 2, characterized in that the gelling agent is composed of polymeric surface-active agents.

7. Method for producing a material coated with bitumen emulsion according to any one of claims 1 to 6, characterized in that the gelling agent is incorporated into the granulates before mixing with the emulsion.

8. Method for producing a material coated with bitumen emulsion according to any one of claims 1 to 6, characterized in that:
- the aqueous phase of the emulsion is prepared by mixing water and the emulsifying agent,
- the aqueous phase thus prepared is mixed with bitumen in a colloid mill,
- the emulsion and the granulates are then mixed,
- the gelling agent is added during any one of the steps of this method.

9. Method for producing a material coated with bitumen emulsion according to any one of claims 1 to 6, characterized in that:
- the aqueous phase of the emulsion is prepared by mixing water and the emulsifying agent,
- the aqueous phase thus prepared is mixed with bitumen in a colloid mill,
- and during this mixing, the gelling agent is incorporated, and the emulsion and the granulates are then mixed.

10. Method for producing a material coated with bitumen emulsion according to any one of claims 1 to 6, characterized in that:
- the aqueous phase of the emulsion is prepared by mixing water and the emulsifying agent,
- the aqueous phase thus prepared is mixed with bitumen in a colloid mill,
- the gelling agent is mixed with the emulsion thus formed,
- the emulsion is finally mixed with the granulates.

11. Use of between 0.25 and 5 grams per liter of emulsion of a gelling agent in a dense granular material, obtained by cold coating of granulates with an aqueous emulsion of bitumen whose granular fraction contains at least 25% of its total mass of material which passes a 2 mm sieve and at least 5% of material which passes a 0.08 mm sieve, the gelling agent providing to the aqueous phase a gel-like behavior shown by the existence of a flow threshold greater than 0.1 N/m².
